(19) Europäisches Patentamt / European Patent Office / Office européen des brevets

(11) **EP 4 176 094 B1**

(12) **EUROPEAN PATENT SPECIFICATION**

(45) Date of publication and mention
of the grant of the patent:
**12.02.2025 Bulletin 2025/07**

(21) Application number: **21742187.4**

(22) Date of filing: **01.07.2021**

(51) International Patent Classification (IPC):
$C25C\ 1/06$ (2006.01)   $C25C\ 1/22$ (2006.01)
$C25C\ 5/00$ (2006.01)   $C22B\ 1/00$ (2006.01)
$C22B\ 3/44$ (2006.01)   $C22B\ 7/00$ (2006.01)
$C22B\ 59/00$ (2006.01)

(52) Cooperative Patent Classification (CPC):
**C25C 5/00; C22B 1/005; C22B 3/44; C22B 7/008;
C22B 59/00; C25C 1/06; C25C 1/22;** Y02P 10/20

(86) International application number:
**PCT/IL2021/050811**

(87) International publication number:
**WO 2022/003694 (06.01.2022 Gazette 2022/01)**

(54) **RECOVERY OF RARE EARTH METALS FROM FERROMAGNETIC ALLOYS**

RÜCKGEWINNUNG VON SELTENERDMETALLEN AUS FERROMAGNETISCHEN LEGIERUNGEN

RÉCUPÉRATION DE MÉTAUX DES TERRES RARES À PARTIR D'ALLIAGES FERROMAGNÉTIQUES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.07.2020 US 202063046727 P**

(43) Date of publication of application:
**10.05.2023 Bulletin 2023/19**

(73) Proprietor: **Yeda Research and Development Co.
Ltd
7610002 Rehovot (IL)**

(72) Inventors:
• **LUBOMIRSKY, Igor
4937415 Petach-Tikva (IL)**
• **KAPLAN, Valery
7610002 Rehovot (IL)**

(74) Representative: **Pearl Cohen Zedek Latzer Baratz
UK LLP
The Gridiron Building
One Pancras Square
London N1C 4AG (GB)**

(56) References cited:
**JP-A- 2012 219 326**

• **MAKAROVA IRINA ET AL: "Electrochemical
leaching of rare-earth elements from spent
NdFeB magnets", HYDROMETALLURGY,
ELSEVIER SCIENTIFIC PUBLISHING CY.
AMSTERDAM, NL, vol. 192, 22 January 2020
(2020-01-22), XP086076658, ISSN: 0304-386X,
[retrieved on 20200122], DOI: 10.1016/
J.HYDROMET.2020.105264**
• **MATEUSZ SZYMA&NACUTE;SKI ET AL:
"Recycling of Nd-Fe-B Magnets from Scrap Hard
Disc Drives", KEY ENGINEERING MATERIALS,
vol. 682, 1 February 2016 (2016-02-01), pages 308
- 313, XP055426173, DOI: 10.4028/
www.scientific.net/KEM.682.308**
• **KAMIMOTO Y ET AL: "Electrodeposition of rare-
earth elements from neodymium magnets using
molten salt electrolysis", JOURNAL OF
MATERIAL CYCLES AND WASTE
MANAGEMENT, SPRINGER JAPAN, TOKYO, vol.
20, no. 4, 13 November 2017 (2017-11-13), pages
1918 - 1922, XP036601060, ISSN: 1438-4957,
[retrieved on 20171113], DOI: 10.1007/
S10163-017-0682-5**

EP 4 176 094 B1

**(Cont. next page)**

- **SHIRAYAMA SAKAE ET AL: "Selective Extraction and Recovery of Nd and Dy from Nd-Fe-B Magnet Scrap by Utilizing Molten MgCl2", METALLURGICAL AND MATERIALS TRANSACTIONS B, SPRINGER NEW YORK LLC, US, vol. 49, no. 3, 23 February 2018 (2018-02-23), pages 1067 - 1077, XP036501734, ISSN: 1073-5615, [retrieved on 20180223], DOI: 10.1007/S11663-018-1176-0**

- **ITAKURA T ET AL: "Resource recovery from Nd-Fe-B sintered magnet by hydrothermal treatment", JOURNAL OF ALLOYS AND COMPOUNDS, ELSEVIER SEQUOIA, LAUSANNE, CH, vol. 408-412, 9 February 2006 (2006-02-09), pages 1382 - 1385, XP027999760, ISSN: 0925-8388, [retrieved on 20060209], DOI: 10.1016/J.JALLCOM.2005.04.088**

**Description**

**FIELD OF THE INVENTION**

This invention is directed to methods for recovery of at least one rare earth metal from ferromagnetic alloy, including a chlorination of the rare earth metal following by separation of the chlorinated product.

**BACKGROUND OF THE INVENTION**

Rare earth magnets based upon neodymium-iron-boron (NdFeB) are employed in many clean energy and high-tech applications, including hard disk drives (HDDs), motors in electric vehicles and electric generators in wind turbines. In recent years, the supply of rare earth metals has come under considerable strain. This resulted in dramatic price fluctuations for the rare earth metals, in particular, neodymium, praseodymium and dysprosium, the rare earth constituents of NdFeB magnets. According to the EU Critical Materials list (2010, 2014) and the US Department of Energy's energy critical element list (2010), the rare earth metals are classified as at greatest risk of supply shortages compared to those of all other materials used for clean energy technologies.

There are several ways in which these material shortages could be addressed including: (a) opening more rare earth mines, (b) using alternative technologies which do not contain rare earths (c) reducing the amount of rare earth metal used in particular applications such as magnets or (d) recycling the existing stock of magnets containing rare earth metals with various types of equipment. However, with regard to option (a), the mining, beneficiation and separation of rare earth elements is energy intensive, results in toxic by-products from acid leaching processes and the primary ores are nearly always mixed with radioactive elements such as thorium. If alternative technologies are employed, as in option (b) or reduction of rare earth metal quantities as in option (c), compared to permanent magnet machines, this often leads to a drop in efficiency and performance.

Recycling of magnet scrap from waste products consists of multiple steps, including preliminary steps; separation of the magnets from the waste product, demagnetization through heat treatment at 300-350°C, decarbonization (for removal of resin) by combustion at 700-1000°C under air or oxygen flow, and deoxidization by hydrogen reduction [1-3]. The main process (separation of rare earth metals and iron) begins after these preliminary stages. Several wet processes: acid dissolution [4], solvent extraction, and the oxalate method [5] are used too for recovery of the neodymium. These wet chemical methods have poor yield from the acid dissolution and effluent treatment steps, which requires a multiple-step process resulting in high cost. It is important that the recovery process for the rare earth metals from magnet scrap has as low cost and as few steps as possible, because recovery of the magnets from the product is itself a multi-step process.

Several works were carried out on the chlorination of magnets with various reagents: $NH_4Cl$ [6], $FeCl_2$ [7], $MgCl_2$ [8], and chlorine gas with carbon [9]. The use of $NH_4Cl$, $FeCl_2$, and $MgCl_2$ as chlorinators led to the formation of neodymium chloride and iron and boron alloy remained in the solid metallic form. The resulting mixture of the neodymium chloride and Fe-B metal residue was then separated by vacuum distillation or magnetic separation. The chlorination method is low-cost, simplifies the overall process, and reduces the amount of effluent requiring treatment as a dry process. A method for chlorinating magnets with chlorine and carbon addition at a temperature of 100-1000°C with preliminary oxidation treatment was proposed in [9].

It was shown that preliminary oxidation sintering in an air stream with the conversion of all metals to oxides ($Fe_2O_3$, $FeNdO_3$, $Nd_2O_3$) dramatically reduces the degree of sublimation of iron and boron during chlorination with pure chlorine. When carbon is added to the chlorination process (carbochlorination process), the degree of sublimation of iron and boron chlorides increases. It is known [10] that the Gibbs energy of the chlorination reaction of metal oxides by chlorine gas is a significant positive value; therefore, successful chlorination of them with pure chlorine is practically impossible. Chlorination of metal oxides showed to be effective with the addition of a reducing agent and the addition of carbon during the chlorination of oxides which dramatically increased the efficiency of the chlorides sublimation process [10].

One of the biggest challenges associated with the recycling of magnets is how to separate efficiently the magnets from the other components.

Kamimoto et al. discloses the electrodeposition of rare-earth elements from neodymium magnets using molten salt electrolysis (Journal of Material Cycles and Waste Management, Springer Japan, Tokyo, vol. 20, no. 4, 13 November 2017, pages 1918-1922, DOI: 10.1007/S10163-017-0682-5).

Szymański et al. discloses the recycling of Nd-Fe-B magnets from scrap hard disc drives (Key Engineering Materials, vol. 682, 1 February 2016, pages 308-313, DOI: 10.4028/www.scientific.net/KEM.682.308).

**SUMMARY OF THE INVENTION**

The present invention provides a method for electrolytic atomic hydrogen decrepitation of a ferromagnetic alloy, wherein the method comprises an electrolytic reaction by providing an applied potential between an anode and a cathode, wherein the ferromagnetic alloy is connected to the cathode, producing atomic hydrogen at the cathode, wherein the ferromagnetic alloy is scattered by the atomic hydrogen to obtain a ferromagnetic alloy powder. The present invention is defined by claim 1.

In an embodiment, the electrolytic atomic hydrogen decrepitation is carried out at room temperature.

In an embodiment, the cathode comprises copper, nickel, steel, titanium, or a combination thereof.

In an embodiment, the anode comprises lead, nickel, steel or a combination thereof.

This invention also provides a method for recovery of at least one rare earth metal from ferromagnetic alloy, the method comprising: pre-treatment of the ferromagnetic alloy by the atomic hydrogen decrepitation treatment, followed by:

(a) reacting the ferromagnetic alloy powder with at least one chlorine-containing gas at a temperature of between 400°C and 450°C yielding a volatile iron-containing chloride product and non-volatile at least one rare earth metal chloride;
(b) providing air flow to said volatile iron-containing chloride product, and oxidizing the iron-containing chloride product to iron oxide;
(c) separating said iron oxide product and non-volatile at least one rare earth metal chloride;
(d) cooling said separated non-volatile at least one rare earth metal chloride; and
(e) electrolyzing said cooled non-volatile at least one rare earth metal chloride;

thereby recovering said at least one rare earth metal.

In an embodiment, the at least one chlorine-containing gas in step (a) is present in an amount of 0.5 - 2.0 kg of chlorine per 1 kg of ferromagnetic alloy.

In an embodiment, the air flow to the volatile iron-containing chloride product of step (b) is present in an amount of 0.5 - 2.0 kg of air per 1 kg of volatile iron-containing chloride product.

In an embodiment, the at least one rare earth metal is selected from cerium (Ce), dysprosium (Dy), erbium (Er), europium (Eu), gadolinium (Gd), holmium (Ho), lanthanum (La), lutetium (Lu), neodymium (Nd), praseodymium (Pr), promethium (Pm), samarium (Sm), scandium (Sc), terbium (Tb), thulium (Tm), ytterbium (Yb), and yttrium (Y).

## BRIEF DESCRIPTION OF THE DRAWINGS

The subject matter regarded as the invention is particularly pointed out and distinctly claimed in the concluding portion of the specification. The invention, however, both as to organization and method of operation, together with objects, features, and advantages thereof, may best be understood by reference to the following detailed description when read with the accompanying drawings in which:

**Figure 1** shows the ferromagnetic alloy before atomic hydrogen decrepitation.
**Figure 2** shows the ferromagnetic alloy after atomic hydrogen decrepitation.

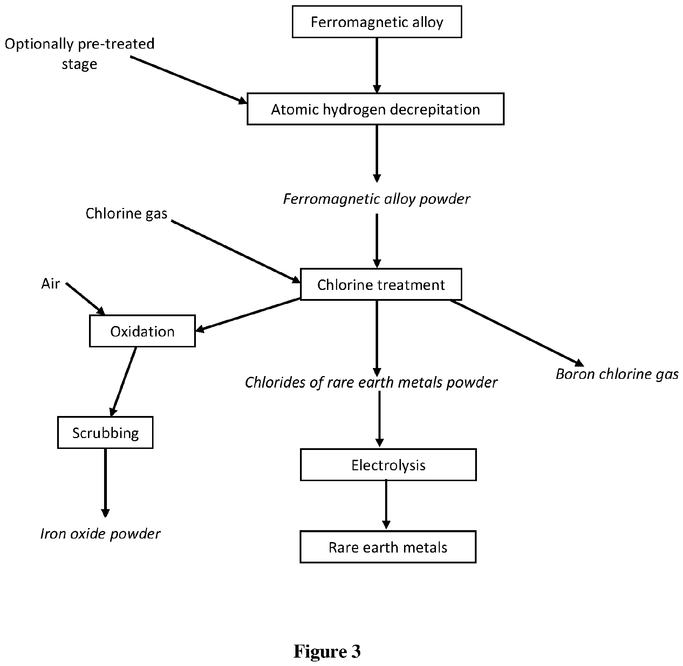

**Figure 3** is a schematic description of the method of the present invention.
**Figures 4A and 4B** show X-ray diffraction (XRD) of the ferromagnetic alloy (initial magnet) before atomic hydrogen decrepitation - **Figure 4A:** sample 1; **Figure 4B:** sample 2. (The contents of samples 1 and 2 are provided in Example 3, Table 3 below).
**Figures 5A-5D** present characterization of initial magnet characterized by energy dispersive X-ray fluorescence spectroscopy providing SEM image of the initial magnet 1(Figure 5A); SEM image of the initial magnet 2(Figure 5B); EDS spectrum of the initial magnet -Sample 1 (Figure 5C) ; and EDS spectrum of the initial magnet -Sample 2 (Figure 5D).
**Figure 6** shows the laboratory setup for the atomic hydrogen decrepitation.
**Figure 7** shows powder X-ray diffraction (XRD) pattern of the magnet powder after atomic hydrogen decrepitation.
**Figure 8** shows SEM image of the magnet powder after the atomic hydrogen decrepitation.
**Figure 9** shows the laboratory setup for chlorine treatment for extraction rare earth metals from permanent magnets.
**Figures 10A and 10B** show characterization of the composition of the material after chlorine gas treatment by energy dispersive X-ray fluorescence spectroscopy (EDS, LEO Supra) of Sample 1 **(Figure 10A)** and Sample 2 **(Figure 10B).**
**Figure 11A** shows powder X-ray diffraction (XRD) pattern of the sublimations from neodymium magnet samples following temperature treatment (400°C) with chlorine gas. "1" refers to $Fe_2O_3$ and "2" refers to FeOCl. **Figure 11B** shows Quantitative phase analysis of the sublimations as obtained from the XRD pattern in **Figure 11A.**

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

## DETAILED DESCRIPTION OF THE PRESENT INVENTION

In the following detailed description, numerous specific details are set forth in order to provide a thorough understanding of the invention. However, it will be understood by those skilled in the art that the present invention may be practiced without these specific details. In other instances, well-known methods, procedures, and components have not been described in detail so as not to obscure the present invention.

The present invention provides a method for electrolytic atomic hydrogen decrepitation of a ferromagnetic alloy, wherein the method comprises an electrolytic reaction by providing an applied potential between an anode and a cathode, wherein the ferromagnetic alloy is connected to the cathode, producing atomic hydrogen at the cathode, wherein the ferromagnetic alloy is scattered by the atomic hydrogen to obtain a ferromagnetic alloy powder.

This invention also provides a method for recovery of at least one rare earth metal from ferromagnetic alloy, the method comprising: pre-treatment of the ferromagnetic alloy by the atomic hydrogen decrepitation treatment, followed by:

(a) reacting ferromagnetic alloy powder with at least one chlorine-containing gas at a temperature of between 400°C and 450°C yielding a volatile iron-containing chloride product and non-volatile at least one rare earth metal chloride;
(b) providing air flow to said volatile iron-containing chloride product and oxidizing the iron-containing chloride product to iron oxide;
(c) separating said iron oxide product and non-volatile at least one rare earth metal chloride;
(d) cooling said separated non-volatile at least one rare earth metal chloride; and
(e) electrolyzing said cooled non-volatile at least one rare earth metal chloride;

thereby recovering said at least one rare earth metal.

In other embodiments, the decrepitation is performed at room temperature. In other embodiments, the electrolysis is performed using a first electrode (cathode) of copper, nickel, steel, titanium or combination thereof; and a second electrode (anode) of lead, nickel, steel or combination thereof. In other embodiments, the ferromagnetic alloy is attached to said first electrode (cathode).

In an embodiment, the recovery of spent neodymium magnets by chlorine treatment does not require pre-treatment of magnets. After treatment at 400°C, a clinker consisting of rare earth metals chlorides and sublimates consisting of iron oxide and iron chlorides were obtained. The resulting rare earth metals chlorides can be easily processed by electrolysis of the molten salts for rare earth metals production [12, 13].

When referring to a ferromagnetic (can be used interchangeably with ferrimagnetic) alloy it should be understood to encompass any type of source (including spent) of permanent magnet made of a combination of metals that creates its own persistent magnetic field. These metals include the elements iron, nickel and cobalt, rare-earth metals, naturally occurring minerals (such as lodestone) and any combination thereof.

In some embodiments, said at least one rare earth metal is selected from cerium (Ce), dysprosium (Dy), erbium (Er), europium (Eu), gadolinium (Gd), holmium (Ho), lanthanum (La), lutetium (Lu), neodymium (Nd), praseodymium (Pr), promethium (Pm), samarium (Sm), scandium (Sc), terbium (Tb), thulium (Tm), ytterbium (Yb), and yttrium (Y).

In some embodiments, the at least one chlorine-containing gas which is used in the methods of this invention (step (a)) is present in an amount of 0.5 - 2.0 kg of the chlorine per 1 kg of the ferromagnetic alloy (or powder alloy).

In an embodiment, said air flow to the volatile iron-containing chloride product of step (b) is present in an amount of 0.5 - 2.0 kg of the air per 1 kg of the volatile iron-containing chloride product.

In other embodiments, the electrolysis in step (e) is performed using graphite electrodes (cathode, anode). In some further embodiments, said electrolysis is performed at a temperature range of between about 500 to 1500°C. In other embodiments, said electrolysis is performed using potential of between 10 to 15V.

The following non-limiting examples are presented in order to more fully illustrate certain embodiments of the invention. They should in no way, however, be construed as limiting the broad scope of the invention. One skilled in the art can readily devise many variations and modifications of the principles disclosed herein.

## EXAMPLES

## EXAMPLE 1- Magnets Treatment with Atomic Hydrogen - Decrepitation

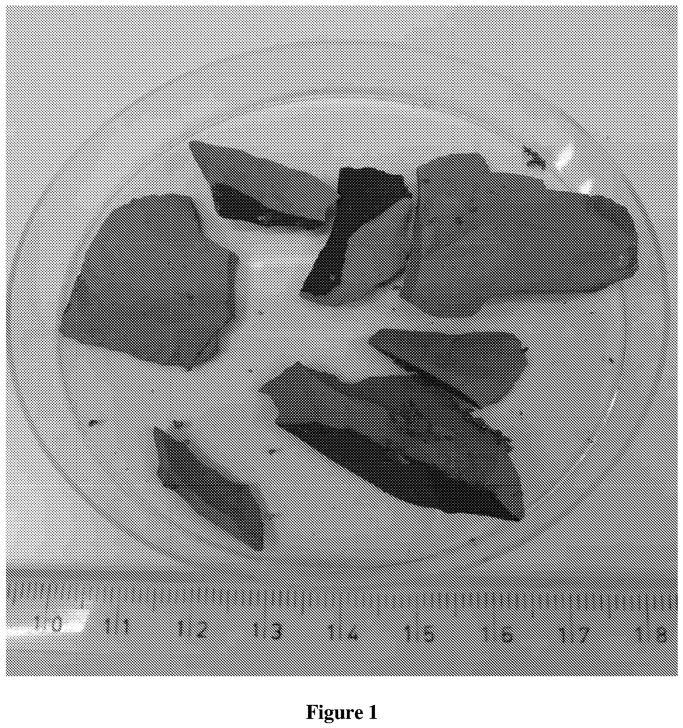

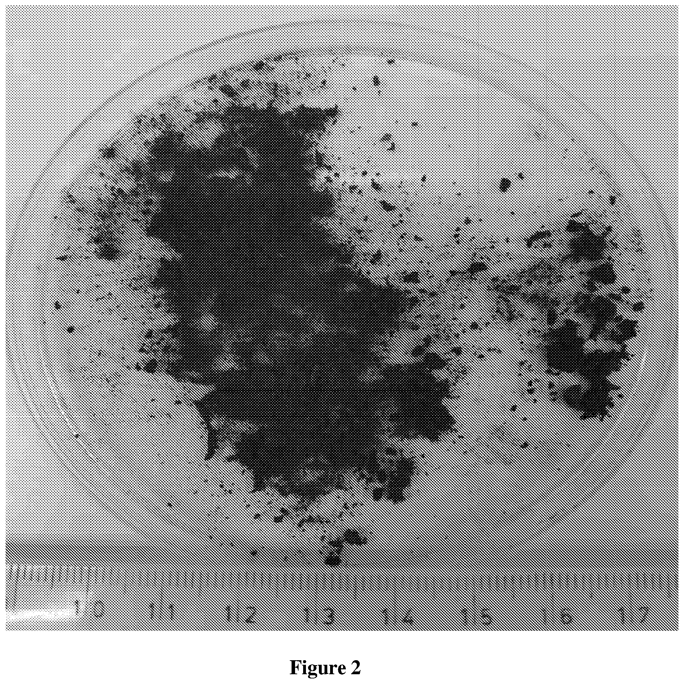

The decrepitation of the ferromagnetic alloy was carried out in aqueous 1M sodium hydroxide solution at room temperature. Electrolysis was carried out with cathode copper electrode and lead anode electrode. Current density was 0.1A/$cm^2$. Uncrushed ferromagnetic alloy was attached to the cathode electrode. The atomic hydrogen that is released at the cathode passes through a layer of pieces of a ferromagnetic alloy and reacted with him. The pieces of a ferromagnetic alloy are scattered by atomic hydrogen reaction with ferromagnetic alloy powder production. Figures 1, 2 and 8 show the ferromagnetic alloy before and after atomic hydrogen decrepitation.

*Characterization of the initial magnets.*

Used magnet pieces were used as input material.

Content of components presented in the Table 1.

**Table 1.** Content of components in the used magnet pieces.

| Sample | Content (mass %) | | | | |
|---|---|---|---|---|---|
| | Iron | Neodymium | Praseodymium | Dysprosium | Cerium |
| 1 | 64.9 | 24.5 | 8.1 | 4.3 | 0 |
| 2 | 32.8 | 31.8 | 16.7 | 0.8 | 15.4 |

Photo of some magnet pieces is presented in the Figure 1.

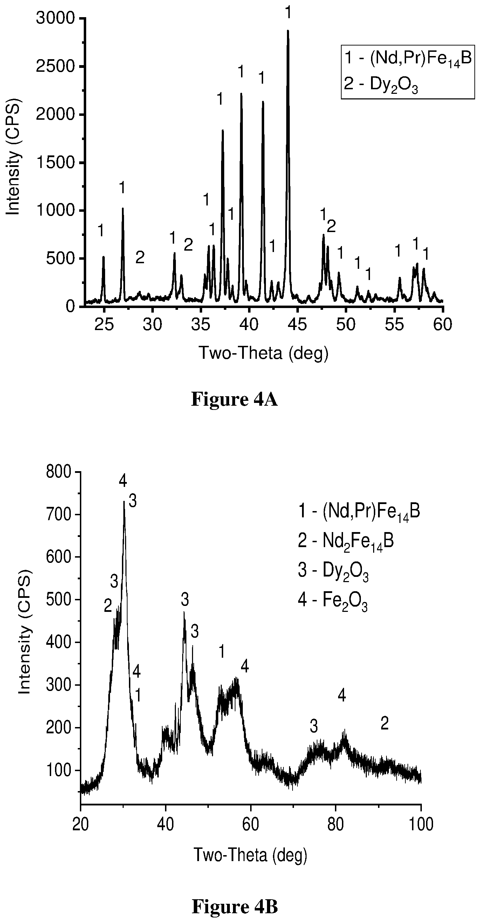

Material X-ray diffraction (XRD) was performed on an Ultima III diffractometer (Rigaku Corporation, Japan) with quantitative phase analysis accomplished using Jade_10 (MDI, Cal.) software and the ICSD database (Figure 4A).

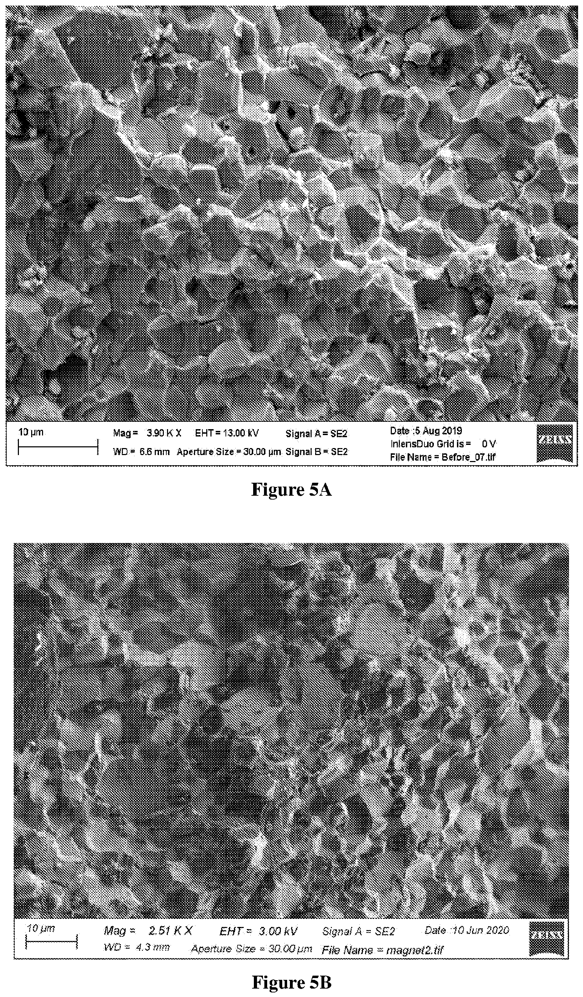

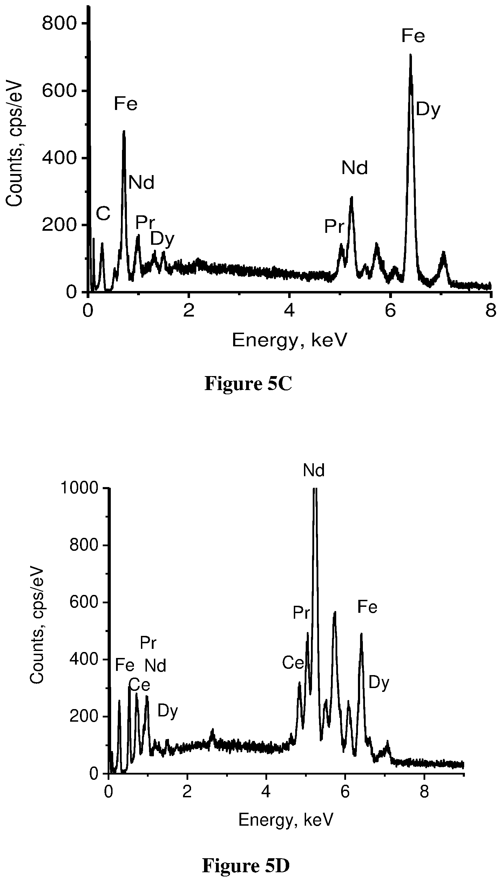

The composition of the material was characterized by energy dispersive X-ray fluorescence spectroscopy (EDS, LEO Supra) (Figures 5A-5D).

*Thermodynamic Calculations.*

Calculations of Gibbs energy were performed using a computer program and based on standard values for the pure substances [11]. The Gibbs energy ($\Delta G$) in the temperature range 273-473 K is shown in Table 2 for reactions with hydrogen. Group 1- reactions with atomic hydrogen; Group 2 - reactions with molecular hydrogen; Group 3 - hydrolysis reactions of metal hydrides in the water.

**Table 2.** Gibbs energy ($\Delta G$) calculated for magnet treatment with hydrogen.

| N | Reaction | Temperature, K | | | | |
|---|---|---|---|---|---|---|
| | | 273 | 323 | 373 | 423 | 473 |
| | | $\Delta G$, kJ/mole | | | | |
| | **Group 1** | | | | | |
| 1 | $Nd\ (s) + 2H\ (g) = NdH_2\ (s)$ | -572.1 | -560.0 | -547.7 | -535.3 | -522.6 |
| 2 | $Pr\ (s) + 2H\ (g) = PrH_2\ (s)$ | -568.6 | -556.3 | -543.7 | -531.0 | -518.1 |
| 3 | $Fe\ (s) + H\ (g) = FeH\ (g)$ | 212.3 | 208.9 | 205.6 | 202.3 | 199.2 |
| 4 | $Dy_2O_3\ (s) + 6\ H(g) = 2Dy\ (s) + 3H_2O\ (1)$ | -171.9 | -148.0 | -124.3 | -100.9 | -77.7 |
| 5 | $Dy_2O_3\ (s) + 10\ H(g) = 2DyH_2\ (s) + 3H_2O\ (1)$ | -1376.5 | -1328.5 | -1280.4 | -1232.1 | -1183.7 |
| | **Group 2** | | | | | |
| 6 | $Nd\ (s) + H_2\ (g) = NdH_2\ (s)$ | -163.1 | -155.9 | -148.7 | -141.3 | -133.9 |
| 7 | $Pr\ (s) + H_2\ (g) = PrH_2\ (s)$ | -159.6 | -152.2 | -144.7 | -137.1 | -129.4 |
| 8 | $Fe\ (s) + 0.5\ H_2\ (g) = FeH\ (g)$ | 416.8 | 410.9 | 405.1 | 399.3 | 393.5 |
| 9 | $Dy_2O_3\ (s) + 3\ H_2\ (g) = 2Dy\ (s) + 3H_2O\ (1)$ | 1055.1 | 1064.2 | 1072.8 | 1080.8 | 1088.4 |
| 10 | $Dy_2O_3\ (s) + 5\ H_2\ (g) = 2DyH_2\ (s) + 3H_2O\ (1)$ | 668.6 | 691.8 | 714.8 | 737.5 | 759.9 |
| | **Group 3** | | | | | |
| 11 | $NdH_2\ (s) + 3H_2O\ (1) = Nd(OH)_3\ (s) + 2.5H_2\ (g)$ | -496.6 | -506.0 | -514.8 | -523.2 | -531.1 |
| 12 | $PrH_2\ (s) + 3H_2O\ (1) = Pr(OH)_3\ (s) + 2.5H_2\ (g)$ | -413.8 | -423.4 | -432.4 | -440.8 | -448.8 |

(continued)

| | Group 3 | | | | | |
|---|---|---|---|---|---|---|
| 13 | $DyH_2$ (s) + $3H_2O$ (1) = $Dy(OH)_3$ (s) + $2.5H_2$ (g) | -388.8 | -397.9 | -405.5 | -411.9 | -417.1 |
| 14 | $NdH_2$ (s) + $1.5H_2O$ (1) = $0.5Nd_2O_3$ (s) + $2.5H_2$ (g) | -339.4 | -351.5 | -363.4 | -375.2 | -386.7 |
| 15 | $PrH_2$ (s) + $1.5H_2O$ (1) = $0.5Pr_2O_3$ (s) + $2.5H_2$ (g) | -342.7 | -354.9 | -366.9 | -378.8 | -390.5 |
| 16 | $DyH_2$ (s) + $1.5H_2O$ (1) = $0.5Dy_2O_3$ (s) + $2.5H_2$ (g) | -334.3 | -345.9 | -357.4 | -368.7 | -380.0 |
| s - solid, 1- liquid, g - gas. | | | | | | |

Under the above conditions, the Gibbs energy of the reactions (1, 2) in Group 1 for rare metals were strongly negative (- 520-570 kJ/mole).

Thermodynamic calculations predict that the reactions of Nd and Pr from magnets with atomic hydrogen gas can result in the formation of Nd and Pr hydrides within a wide temperature range, including the range of interest 273-373 K. Dysprosium is present in magnets as an additive in the form of oxide $Dy_2O_3$ and can react with atomic hydrogen with metallic dysprosium or $DyH_2$ production (reactions 4, 5). Group 2 includes hydrogen treatment reactions between magnet components and molecular hydrogen. The likelihood of reactions (6, 7) is ensured over the entire temperature range of interest too, with the most negative value being $\Delta G$ = -163 kJ/mole for reaction (6). However, the value of Gibbs energy for reactions (6, 7) is much lower than for reactions (1, 2). $Dy_2O_3$ does not react with molecular hydrogen (reactions 8, 9). Iron from a magnet practically does not participate in reactions with hydrogen under our conditions (reactions 3, 8). Group 3 includes hydrolysis reactions of the neodymium, praseodymium, and dysprosium hydrides in the water. Under our conditions, the Gibbs energy of the hydrolysis reactions (11-16) in Group 3 for rare metals is strongly negative (- 350-530 kJ/mole). Thermodynamic calculations predict that the hydrolysis reactions of the neodymium, praseodymium, and dysprosium hydrides can result in the formation of Nd, Pr, and Dy hydroxides or oxides within a wide temperature range, including the range of interest 273-373 K.

The chemical decrepitation of magnet described by reactions (1, 2) showing Gibbs energy of - 520-570 kJ/mole, thereby predicting rapid chemical decrepitation of magnet upon atomic hydrogen treatment. $Dy_2O_3$ can react with atomic hydrogen with metallic dysprosium or $DyH_2$ production (reactions 4, 5). These reactions (1, 2, 4, 5) lead to the magnet decrepitation to obtain a magnet powder with a particle size of less than 200 mesh.

*Experimental Procedure*

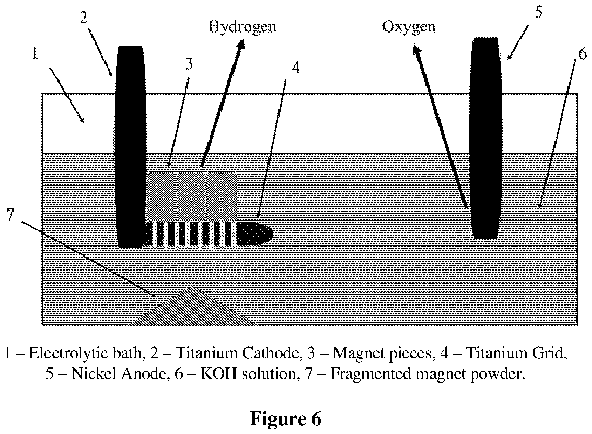

The laboratory setup is described in Figure 6. Test duration was 2-4 hours. Temperature was varied from room temperature to boiling temperature. Potential was 4.7 V, current - 13-15A. Cathode current density was 0.8-0.9 A/cm$^2$.

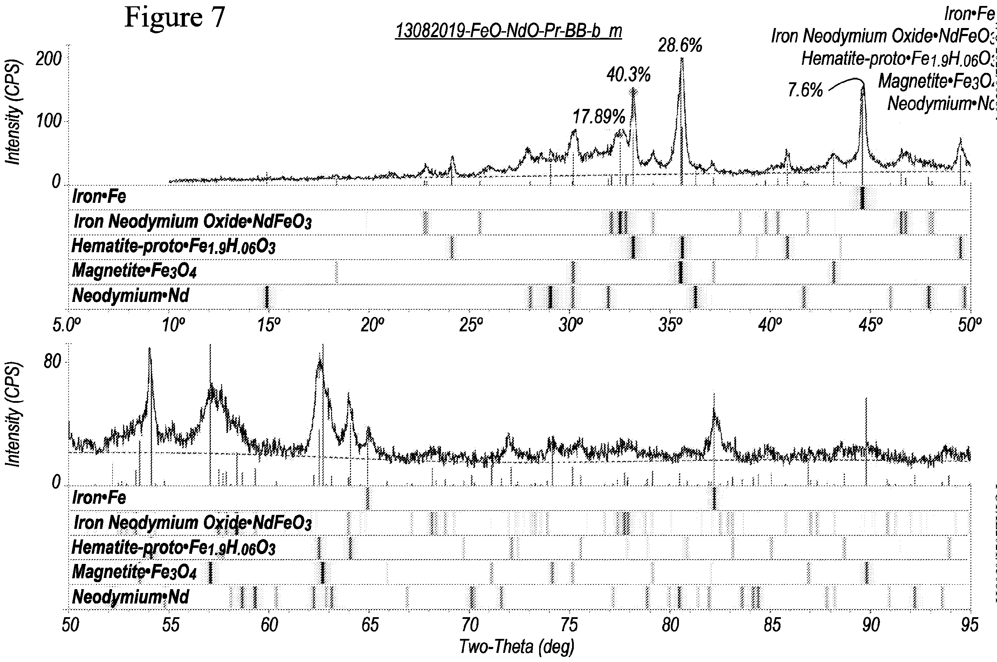

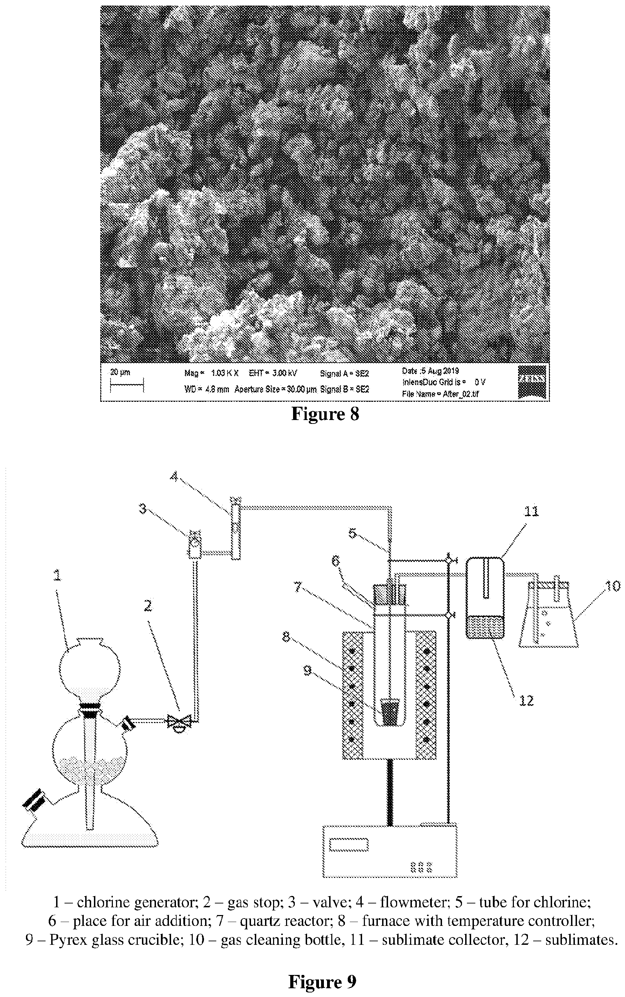

Glass with one mole/liter KOH solution was used as electrolytic bath. Titanium was used as cathode, nickel plate - as anode. Pieces (30-40 mm) of the neodymium magnet (as they are, without demagnetization, crushing and milling) were placed on the titanium grid, connected with cathode. Atomic hydrogen, which was emitted during electrolysis, released on the surface of the magnet pieces, and decrepitated them with powder production. Magnet powder passed through the grid and collected at the bottom of the electrolytic bath. Figure 7 shows the Powder X-ray diffraction (XRD) pattern of the magnet powder after decrepitation; and Figure 8 shows in a photo and SEM image of the magnet powder after decrepitation.

### EXAMPLE 2-Rare-Earth Metal Extraction Including Atomic Hydrogen - Decrepitation Step

Treatment of the powder of the ferromagnetic alloy with chlorine gas at 400-450°C. The material was loaded into the reactor. Chlorine was fed into the reactor, heated to a temperature 400-450°C. After the reaction, the chlorides of iron and boron were sublimated and removed from the reactor. Iron chloride was captured in a scrubber with water, and boron chloride was removed with gases. Chlorides of rare earth metals remained in the reactor. Iron-containing chloride vapor product ($FeCl_3$) were received in the scrubber and non-volatile neodymium and praseodymium chlorides ($NdCl_3$, $PrCl_3$) in the reactor.

### EXAMPLE 3 - Rare-Earth Metal Extraction Without Pre-Treatment of Atomic Hydrogen - Decrepitation

In this Example, a process for rare-earth extraction did not require pre-treatment of magnets. The magnets that were used did not include demagnetization, crushing and milling pretreatments. After treatment at 400°C, a clinker consisting of rare earth metals chlorides and sublimates consisting of iron oxide and iron chlorides were obtained.

*Characterization of the initial magnets.*

Used magnet pieces were used as input material. Content of components presented in the Table 3.

**Table 3.** Content of components in the used magnet pieces.

| Sample | Content (mass %) | | | | |
|---|---|---|---|---|---|
| | Iron | Neodymium | Praseodymium | Dysprosium | Cerium |
| 1 | 64.9 | 24.5 | 8.1 | 4.3 | 0 |
| 2 | 32.8 | 31.8 | 16.7 | 0.8 | 15.4 |

Material X-ray diffraction (XRD) was performed on an Ultima III diffractometer (Rigaku Corporation, Japan) with quantitative phase analysis accomplished using Jade_10 (MDI, Cal.) software and the ICSD database (Figure 4A and 4B).

The composition of the material was characterized by energy dispersive X-ray fluorescence spectroscopy (EDS, LEO Supra) (Table 3 and Figures 4A and 4B).

Table 3 shows that both magnets are made up of the same elements, but the relationships between the elements are rather different. According to X-ray diffraction patterns, the first sample (Fig. 4A) is a well-crystalline material with an average crystal size of about 70 nm, while the second (Fig. 4B) consists of nanocrystals with a size of about 5 nm.

All the main peaks in Figure 4A correspond well to $Nd_2Fe_{14}B$ and $NdPrFe_{14}B$ (their peaks have almost identical positions), and the remaining peaks correspond to $Dy_2O_3$, which were only a few percent. According to the EDS results (Table 3), the two main phases in sample 1 had the same amount. In Figure 4B, peaks of $Nd_2Fe_{14}B$ (or $NdPrFe_{14}B$), were observed, but they were relatively small. Compounds shown above the main peaks in Figure 5B were found, given also in Table 3.

*Thermodynamic Calculations.*

Calculations of Gibbs energy were performed using a computer program and based on standard values for the pure substances [11]. The Gibbs energy ($\Delta G$) in the temperature range 373-773 K is shown in Table 4 for chlorination reactions with chlorine gas.

**Table 4.** Gibbs energy ($\Delta G$) calculated for high temperature treatment of used magnet.

| N | Reaction | Temperature, K | | | |
|---|---|---|---|---|---|
| | | 473 | 573 | 673 | 773 |
| | | $\Delta G$, kJ/mole | | | |
| 1 | $Fe\ (s) + 1.5\ Cl_2\ (g) => FeCl_3\ (s)$ | -295.8 | -275.9 | -263.0 | -251.3 |
| 2 | $Fe\ (s) + 1.5\ Cl_2\ (g) => FeCl_3\ (g)$ | -242.3 | -240.5 | -238.6 | -236.6 |
| 3 | $Nd\ (s) + 1.5\ Cl_2\ (g) => NdCl_3\ (s)$ | -923.4 | -899.4 | -875.8 | -852.7 |
| 4 | $B\ (s) + 1.5\ Cl_2\ (g) => BCl_3\ (g)$ | -379.1 | -374.1 | -369.0 | -364.0 |
| 5 | $Pr\ (s) + 1.5\ Cl_2\ (g) = >PrCl_3\ (s)$ | -937.1 | -913.0 | -889.3 | -866.0 |
| 6 | $Dy(s) + 1.5\ Cl_2\ (g) = >DyCl_3\ (s)$ | -863.3 | -836.3 | -809.6 | -783.2 |
| 7 | $Dy_2O_3\ (s) + 3\ Cl_2\ (g) = 2DyCl_3\ (s) + 1.5\ O_2\ (g)$ | 394.9 | 372.1 | 349.7 | 327.8 |
| 8 | $Ce\ (s) + 1.5\ Cl_2\ (g) => CeCl_3\ (s)$ | -934.5 | -910.4 | -886.7 | -863.5 |
| s - solid, g - gas. | | | | | |

Under sintering conditions, the Gibbs energy of the reactions (1 - ,6, 8) was strongly negative within a wide temperature range, including the range of interest 573-673 K, with the most negative value being $\Delta G = -$ (800-900) kJ/mole for reactions (3 and 5). Thus, the highest probability of reactions (1) - (6, 8) can be expected immediately after injection of the chlorine gas. Dysprosium was present in magnets as an additive in the form of oxide $Dy_2O_3$ and did not react with chlorine (reaction 7 from Table 4).

*Experimental Procedure.*

Sintering of neodymium magnet with chlorine gas was carried out in a temperaturecontrolled laboratory furnace at 400°C: sintering time was 2 hour. The laboratory setup is described in Figure 9.

Pieces (30-40 mm) of the neodymium magnet (as they were, without demagnetization, crushing and milling) were placed in the furnace in a Pyrex glass crucible. Prior to heating, the quartz reactor was cleaned under 100 ml/min nitrogen flow, following which the furnace was heated to a given temperature, again under 100 ml/min nitrogen flow. Chlorine gas was fed into the reactor after the latter had reached the designated temperature. All elements (iron, neodymium, praseodymium, and boron) were chlorinated in accordance with reactions (1-6, 8) from Table 4. Dysprosium oxide $Dy_2O_3$ did not react with chlorine (reaction 7 from Table 4).

Chlorides of iron and boron were sublimated (Boiling point of the $FeCl_3$ is 316°C, boiling point of the $BCl_3$ is -107°C) and rare earth metals chlorides remain in the residual clinker (Boiling point of the $NdCl_3$ is 1600°C, boiling point of the $PrCl_3$ is 1710°C). Rare earth metals chlorides and $Dy_2O_3$ were formed of the solid powder clinker (Melting point of the $NdCl_3$ is 758°C, melting point of the $PrCl_3$ is 786°C, melting point of the $Dy_2O_3$ is 2408°C). Air was added to the top part of the reactor for iron chloride oxidation in accordance with reaction (7):

$$2\ FeCl_3 + 1.5\ O_2 = Fe_2O_3 + 3\ Cl_2 \qquad (7)$$

Chlorine was obtained by reaction (7) and could have returned to the Pilot or industrial unit to the chlorination stage, therefore a circulation of chlorine gas can be achieved.

After cooling under nitrogen flow, the crucible was removed from the furnace and broken. The final product (solid $NdCl_3$ - $PrCl_3$ clinker) was weighed and analyzed with XRD and EDS. Mixture of the iron chloride and iron oxide was collected from the top part of the reactor and analyzed with XRD and EDS.

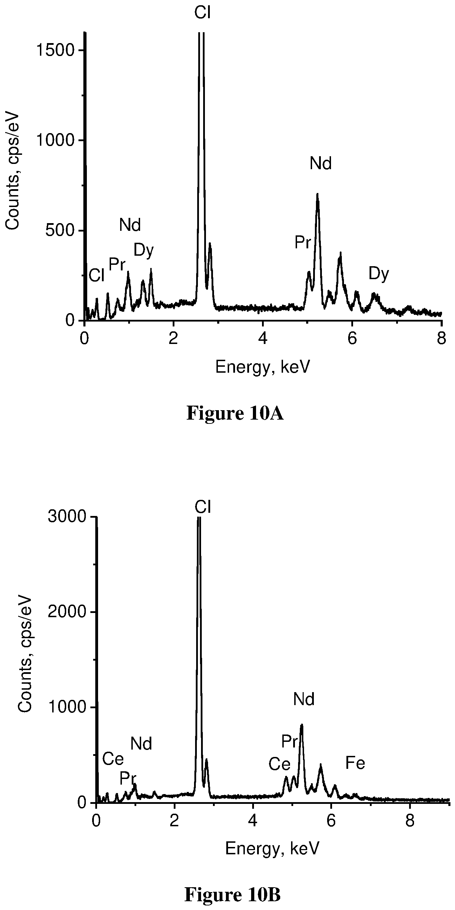

The composition of the material was characterized by energy dispersive X-ray fluorescence spectroscopy (EDS, LEO Supra) (Figures 10A-10B and Table 5).

**Table 5.** The composition of the neodymium clinker (mass %).

| Sample | Iron | Neodymium | Praseodymium | Dysprosium |
|--------|------|-----------|--------------|------------|
| 1 | 0.4 | 56.3 | 26.3 | 9.1 |
| 2 | 0.4 | 59.0 | 32.2 | 1.5 |

The resulting rare earth metals chlorides can be easily processed by electrolysis of the molten salts for metallic rare earth metals production [12-13].

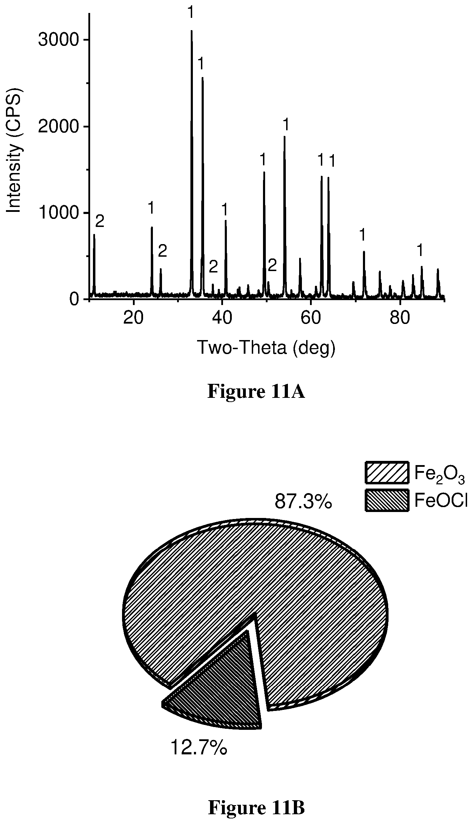

Quantitative phase analysis of X-ray diffraction patterns of sublimations (Figure 11A) showed that two crystalline iron-content phases (hematite $Fe_2O_3$ and iron (III) oxide chloride FeOCl) were obtained with hematite being dominant (Figure 11B).

**List of references cited:**

1. Asabe, K.; Saguchi, A.; Takahashi, W.; Suzuki, R. O.; Ono, K. Recycling of rare earth magnet scraps: Part I carbon removal by high temperature oxidation. Materials Transactions. 2001, 42, 2487-2491.

2. Saguchi, A.; Asabe, K.; Takahashi, W.; Suzuki, R. O.; Ono, K. Recycling of rare earth magnet scraps Part III carbon removal from Nd magnet grinding sludge under vacuum heating. Materials Transactions, 2002, 43, 256-260.

3. Sherdan, R. S.; Sillitoe, R.; Zakotnik, M.; Harris, I. R.; Williams, A. J. Anisotropic powder from sintered NdFeB magnets by HDDR processing route. Journal of Magnetism and Magnetic Materials, 2012, 324, 63-67.

4. Sato, N.; Wei, Y.; Nanjo, M.; Masanori, T. Recovery of samarium and neodymium from rare earth magnet scraps by fractional crystallization method. Metallurgical Review of MMIJ 1998, 15, 1-13.

5. Itakura, T.; Sasai, R.; Itoh, H. Resource recovery from Nd-Fe-B sintered magnet by hydrothermal treatment. Journal of Alloys and Compounds. 2006, 408-412, 1382-1385.

6. Masahiro Itoh, koji Muira, Ken-ichi Machida. Novel rare earth recovery process on Nd-Fe-B magnet scrap by selective chlorination using NH4Cl. Journal of Alloys and Compounds, 2009, 477, 484-487.

7. Tetsuya Uda. Recovery of Rare Earths from Magnet Sludge by FeCl2. Materials Transactions, 2002, 43, 1, 55-62.

8. Sakae Shirayama, Tory H. Okabe. Selective Extraction and Recovery of Nd and Dy from Nd-Fe-B Magnet Scrap by Utilizing Molten MgCl2. Metallurgical and Materials Transactions B. 2018, 49B, 1067-1077.

# EP 4 176 094 B1

9. Yuuki Mochizuki, Naoto Tsubouchi, Katsuyasu Sugawara. Selective Recovery of Rare Earth Elements from Dy containing NdFeB Magnets by Chlorination. ACS Sustainable Chemistry & Engineering. 2013, 1, 655-662.

10. Baibekov M.K., Popov V.D., Cheprakov I.M. TiCl4 production. Moscow, Metallurgia, 1987, 128.

11. E. T. Turkdogan, Physical Chemistry of High Temperature Technology, Academic Press, 1980.

12. Y. Kamimoto, T. Itoh, G. Yoshimura, K. Kuroda, T. Hagio, R. Ichino. Electrodeposition of rare-earth elements from neodymium magnets using molten salt electrolysis. Journal of Material Cycles and Waste Management (2018) 20:1918-1922.

13. H. Vogel, B. Friedrich. Development and Research Trends of the Neodymium Electrolysis - A Literature Review. European Metallurgical Conference, Düsseldorf. Proceedings of EMC 2015, 1-13.

## Claims

1. A method for electrolytic atomic hydrogen decrepitation of a ferromagnetic alloy, wherein the method comprises an electrolytic reaction by providing an applied potential between an anode and a cathode, wherein the ferromagnetic alloy is connected to the cathode, producing atomic hydrogen at the cathode, wherein the ferromagnetic alloy is scattered by the atomic hydrogen to obtain a ferromagnetic alloy powder.

2. The method of claim 1, wherein the electrolytic atomic hydrogen decrepitation is carried out at room temperature.

3. The method of claim 1 or 2, wherein the cathode comprises copper, nickel, steel, titanium, or a combination thereof.

4. The method of any of claims 1-3 wherein the anode comprises lead, nickel, steel or a combination thereof.

5. A method for recovery of at least one rare earth metal from ferromagnetic alloy, the method comprising:

   pre-treatment of the ferromagnetic alloy by the atomic hydrogen decrepitation treatment of any of claims 1-4; followed by

   (a) reacting the ferromagnetic alloy powder with at least one chlorine-containing gas at a temperature of between 400°C and 450°C yielding a volatile iron-containing chloride product and non-volatile at least one rare earth metal chloride;
   (b) providing air flow to the volatile iron-containing chloride product, and oxidizing the iron-containing chloride product to iron oxide;
   (c) separating the iron oxide product and the non-volatile at least one rare earth metal chloride;
   (d) cooling the separated non-volatile at least one rare earth metal chloride; and
   (e) electrolyzing the cooled non-volatile at least one rare earth metal chloride;

   thereby recovering the at least one rare earth metal.

6. The method of claim 5, wherein the at least one chlorine-containing gas in step (a) is present in an amount of 0.5 - 2.0 kg of chlorine per 1 kg of ferromagnetic alloy.

7. The method of any of claims 5-6, wherein the air flow to the volatile iron-containing chloride product of step (b) is present in an amount of 0.5 - 2.0 kg of air per 1 kg of volatile iron-containing chloride product.

8. The method of any of claims 5-7, wherein the at least one rare earth metal is selected from cerium (Ce), dysprosium (Dy), erbium (Er), europium (Eu), gadolinium (Gd), holmium (Ho), lanthanum (La), lutetium (Lu), neodymium (Nd), praseodymium (Pr), promethium (Pm), samarium (Sm), scandium (Sc), terbium (Tb), thulium (Tm), ytterbium (Yb), and yttrium (Y).

## Patentansprüche

1. Verfahren zur elektrolytischen atomaren Wasserstoff-Dekrepitation einer ferromagnetischen Legierung, wobei das Verfahren eine elektrolytische Reaktion umfasst, wonach ein angelegtes Potenzial zwischen einer Anode und einer Kathode bereitgestellt wird, wobei die ferromagnetische Legierung mit der Kathode verbunden ist, wodurch atomarer Wasserstoff an der Kathode prodiziert wird, wobei die ferromagnetische Legierung durch den atomaren Wasserstoff gestreut wird, um ein ferromagnetisches Legierungspulver zu erhalten.

2. Verfahren nach Anspruch 1, wobei die elektrolytische atomare Wasserstoff- Dekrepitation bei Raumtemperatur durchgeführt wird.

3. Verfahren nach Anspruch 1 oder 2, wobei die Kathode Kupfer, Nickel, Stahl, Titan oder eine Kombination davon umfasst.

4. Verfahren nach einem der Ansprüche 1-3 wobei die Anode Blei, Nickel, Stahl oder eine Kombination davon umfasst.

5. Verfahren zur Rückgewinnung mindestens eines Metalls Seltener Erden aus einer ferromagnetischen Legierung, wobei das Verfahren wie folgt umfasst:
eine Vorbehandlung der ferromagnetischen Legierung durch die atomare Wasserstoff-Dekrepitationsbehandlung nach einem der Ansprüche 1-4; gefolgt vom:

   (a) Umsetzen des ferromagnetischen Legierungspulvers mit mindestens einem chlorhaltigen Gas bei einer Temperatur von zwischen 400 °C und 450 °C, wobei ein flüchtiges eisenhaltiges Chloridprodukt und ein nicht flüchtiges Metallchlorid mindestens einer Seltenen Erde erhalten wird;
   (b) Bereitstellen eines Luftstroms zu dem flüchtigen eisenhhaltigen Chloridprodukt und Oxidieren des eisenhaltigen Chloridprodukts zu Eisenoxid;
   (c) Trennen des Eisenoxidprodukts und des einen nicht flüchtigen Metallchlorids mindestens einer Seltenen Erde;
   (d) Kühlen des getrennten einen nicht flüchtigen Metallchlorids mindestens einer Seltenen Erde; und
   (e) Elektrolysieren des gekühlten nicht flüchtigen Metallchlorids mindestens einer Seltenen Erde; dadurch Rückgewinnen des mindestens einen Metalls einer Seltenen Erde.

6. Verfahren nach Anspruch 5, wobei das mindestens eine chlorhaltige Gas aus Schritt (a) in einer Menge von 0,5 - 2,0 kg Clor je 1 kg ferromagnetischer Legierung vorliegt.

7. Verfahren nach einem der Ansprüche 5-6, wobei der Luftstrom zu dem flüchtigen eisenhaltigen Chloridprodukt aus Schritt (b) in einer Menge von 0,5 - 2,0 kg Luft je 1 kg flüchtiges eisenhaltiges Chlorprodukt vorliegt.

8. Verfahren nach einem der Ansprüche 5-7, wobei das mindestens eine Metall einer Seltenen Erde unter Folgenden ausgewählt ist: Cerium (Ce), Dysprosium (Dy), Erbium (Er), Europium (Eu), Gadolinium (Gd), Holmium (Ho), Lanthanum (La), Lutetium (Lu), Neodymium (Nd), Praseodymium (Pr), Promethium (Pm), Samarium (Sm), Scandium (Sc), Terbium (Tb), Thulium (Tm), Ytterbium (Yb) und Yttrium (Y).

**Revendications**

1. Procédé de décrépitation électrolytique par hydrogène atomique d'un alliage ferromagnétique, le procédé comprenant une réaction électrolytique en fournissant un potentiel appliqué entre une anode et une cathode, l'alliage ferromagnétique étant connecté à la cathode, produisant de l'hydrogène atomique au niveau de la cathode, l'alliage ferromagnétique étant dispersé par l'hydrogène atomique pour obtenir une poudre d'alliage ferromagnétique.

2. Procédé selon la revendication 1, dans lequel la décrépitation électrolytique par hydrogène atomique est effectuée à température ambiante.

3. Procédé selon la revendication 1 ou 2, dans lequel la cathode comprend du cuivre, du nickel, de l'acier, du titane ou une combinaison de ceux-ci.

4. Procédé selon l'une quelconque des revendications 1 à 3, dans lequel l'anode comprend du plomb, du nickel, de l'acier ou une combinaison de ceux-ci.

5. Procédé de récupération d'au moins un métal des terres rares à partir d'un alliage ferromagnétique, le procédé comprenant : le prétraitement de l'alliage ferromagnétique par le traitement de décrépitation par hydrogène atomique selon l'une quelconque des revendications 1 à 4 ; suivi par

(a) la réaction de la poudre d'alliage ferromagnétique avec au moins un gaz contenant du chlore à une température comprise entre 400 °C et 450 °C, ce qui donne un produit chloré volatil contenant du fer contenant du fer et un chlorure d'au moins un métal des terres rares non volatil ;

(b) l'apport d'un flux d'air au produit chloré volatil contenant du fer et l'oxydation du produit chloré contenant du fer en oxyde de fer ;

(c) la séparation du produit à base d'oxyde de fer et du chlorure d'au moins un métal des terres rares non volatil ;

(d) le refroidissement du chlorure d'au moins un métal des terres rares non volatil séparé ; et

(e) l'électrolyse du chlorure d'au moins un métal des terres rares non volatil refroidi ; récupérant ainsi le ou les métaux des terres rares.

6. Procédé selon la revendication 5, dans lequel le ou les gaz contenant du chlore de l'étape (a) sont présents en une quantité de 0,5 à 2,0 kg de chlore pour 1 kg d'alliage ferromagnétique.

7. Procédé selon l'une quelconque des revendications 5 à 6, dans lequel le flux d'air vers le produit chloré volatil contenant du fer de l'étape (b) est présent en une quantité de 0,5 à 2,0 kg d'air pour 1 kg de produit chloré volatil contenant du fer.

8. Procédé selon l'une quelconque des revendications 5 à 7, dans lequel le ou les métaux des terres rares sont choisis parmi le cérium (Ce), le dysprosium (Dy), l'erbium (Er), l'europium (Eu), le gadolinium (Gd), l'holmium (Ho), le lanthane (La), le lutétium (Lu), le néodyme (Nd), le praséodyme (Pr), le prométhium (Pm), le samarium (Sm), le scandium (Sc), le terbium (Tb), le thulium (Tm), l'ytterbium (Yb) et l'yttrium (Y).

**Figure 1**

**Figure 2**

Ferromagnetic alloy

Optionally pre-treated stage

Atomic hydrogen decrepitation

*Ferromagnetic alloy powder*

Chlorine gas

Air

Chlorine treatment

Oxidation

*Chlorides of rare earth metals powder*

*Boron chlorine gas*

Scrubbing

Electrolysis

*Iron oxide powder*

Rare earth metals

**Figure 3**

**Figure 4A**

**Figure 4B**

| 10 µm | Mag = 3.90 K X | EHT = 13.00 kV | Signal A = SE2 | Date :5 Aug 2019 |
| | WD = 6.6 mm | Aperture Size = 30.00 µm | Signal B = SE2 | InlensDuo Grid is = 0 V |
| | | | | File Name = Before_07.tif |

**Figure 5A**

| 10 µm | Mag = 2.51 K X | EHT = 3.00 kV | Signal A = SE2 | Date :10 Jun 2020 |
| | WD = 4.3 mm | Aperture Size = 30.00 µm | File Name = magnet2.tif | |

**Figure 5B**

**Figure 5C**

**Figure 5D**

1 – Electrolytic bath, 2 – Titanium Cathode, 3 – Magnet pieces, 4 – Titanium Grid,
5 – Nickel Anode, 6 – KOH solution, 7 – Fragmented magnet powder.

**Figure 6**

Figure 7

**Figure 8**

1 – chlorine generator; 2 – gas stop; 3 – valve; 4 – flowmeter; 5 – tube for chlorine; 6 – place for air addition; 7 – quartz reactor; 8 – furnace with temperature controller; 9 – Pyrex glass crucible; 10 – gas cleaning bottle, 11 – sublimate collector, 12 – sublimates.

**Figure 9**

Figure 10A

Figure 10B

**Figure 11A**

**Figure 11B**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *EU Critical Materials list*, 2010
- *US Department of Energy's energy critical element list*, 2010
- **KAMIMOTO et al.** Journal of Material Cycles and Waste Management. Springer Japan, 13 November 2017, vol. 20, 1918-1922
- **SZYMAŃSKI et al.** *Key Engineering Materials*, 01 February 2016, vol. 682, 308-313
- **ASABE, K.;** ; **SAGUCHI, A.;** ; **TAKAHASHI, W.;** ; **SUZUKI, R. O.;** ; **ONO, K.** Recycling of rare earth magnet scraps: Part I carbon removal by high temperature oxidation.. *Materials Transactions.*, 2001, vol. 42, 2487-2491
- **SAGUCHI, A.;** ; **ASABE, K.;** ; **TAKAHASHI, W.;** ; **SUZUKI, R. O.;** ; **ONO, K.** Recycling of rare earth magnet scraps Part III carbon removal from Nd magnet grinding sludge under vacuum heating.. *Materials Transactions*, 2002, vol. 43, 256-260
- **SHERDAN, R. S.;** ; **SILLITOE, R.;** ; **ZAKOTNIK, M.;** ; **HARRIS, I. R.;** ; **WILLIAMS, A. J.** Anisotropic powder from sintered NdFeB magnets by HDDR processing route.. *Journal of Magnetism and Magnetic Materials*, 2012, vol. 324, 63-67
- **SATO, N.;** ; **WEI, Y.;** ; **NANJO, M.;** ; **MASANORI, T.** Recovery of samarium and neodymium from rare earth magnet scraps by fractional crystallization method.. *Metallurgical Review of MMIJ*, 1998, vol. 15, 1-13
- **ITAKURA, T.;** ; **SASAI, R.;** ; **ITOH, H.** Resource recovery from Nd-Fe-B sintered magnet by hydrothermal treatment.. *Journal of Alloys and Compounds*, 2006, vol. 408-412, 1382-1385

- **MASAHIRO ITOH** ; **KOJI MUIRA** ; **KEN-ICHI MACHIDA.** Novel rare earth recovery process on Nd-Fe-B magnet scrap by selective chlorination using NH4Cl.. *Journal of Alloys and Compounds*, 2009, vol. 477, 484-487
- **TETSUYA UDA.** Recovery of Rare Earths from Magnet Sludge by FeCl2.. *Materials Transactions*, 2002, vol. 43 (1), 55-62
- **SAKAE SHIRAYAMA** ; **TORY H. OKABE.** Selective Extraction and Recovery of Nd and Dy from Nd-Fe-B Magnet Scrap by Utilizing Molten MgCl2.. *Metallurgical and Materials Transactions B.*, 2018, vol. 49B, 1067-1077
- **YUUKI MOCHIZUKI** ; **NAOTO TSUBOUCHI** ; **KATSUYASU SUGAWARA.** Selective Recovery of Rare Earth Elements from Dy containing NdFeB Magnets by Chlorination.. *ACS Sustainable Chemistry & Engineering.*, 2013, vol. 1, 655-662
- **BAIBEKOV M.K.** ; **POPOV V.D.** ; **CHEPRAKOV I.M.** TiCl4 production.. *Moscow, Metallurgia*, 1987, vol. 128
- **E. T. TURKDOGAN.** Physical Chemistry of High Temperature Technology. Academic Press, 1980
- **Y. KAMIMOTO** ; **T. ITOH** ; **G. YOSHIMURA** ; **K. KURODA** ; **T. HAGIO** ; **R. ICHINO.** Electrodeposition of rare-earth elements from neodymium magnets using molten salt electrolysis.. *Journal of Material Cycles and Waste Management*, 2018, vol. 20, 1918-1922
- **H. VOGEL** ; **B. FRIEDRICH.** Development and Research Trends of the Neodymium Electrolysis - A Literature Review.. *European Metallurgical Conference, Düsseldorf. Proceedings of EMC*, 2015, 1-13